(19) Europäisches Patentamt
European Patent Office
Office européen des brevets

(11) **EP 1 932 849 A1**

(12) **EUROPEAN PATENT APPLICATION**

(43) Date of publication:
**18.06.2008 Bulletin 2008/25**

(51) Int Cl.:
***C07F 9/38*** (2006.01)

(21) Application number: **06025515.5**

(22) Date of filing: **11.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thermphos Trading GmbH
6300 Zug (CH)**

(72) Inventors:
• **Notte, Patrick P.
1300 Wavre (BE)**

• **Van Bree, Jan H.J.
3040 Ottenburg (BE)**
• **Devaux, Albert
1346 Mont-Saint-Guibert (BE)**

(74) Representative: **Isenbruck, Günter et al
Isenbruck, Bösl, Hörschler, Wichmann, Huhn
Patentanwälte
Theodor-Heuss-Anlage 12
68165 Mannheim (DE)**

(54) **Reactive phosphonates**

(57) Novel reactive phosphonate compounds are disclosed corresponding to the structural formula set forth. The reactive moiety is preferably selected from the group of Cl, I, Br, $HSO_4$, $NO_3$, mixtures of Cl and I, $CH_3SO_3$ and p-toluene sulfonic acid whereas the hydrocarbon linking group between the nitrogen and the reactive moiety is most preferably a linear hydrocarbon chain having fro 3 to 12 carbon atoms. The novel phosphonates herein can be used in multiple established applications, such as detergency, water treatment, oil recovery, pharmaceutical intermediate and pharmaceutical products. The novel compounds are particularly useful for the "tailor" synthesis of optimized structural arrangements capable of meeting beneficial performance requirements.

**EP 1 932 849 A1**

**Description**

This invention relates to a class of novel phosphonate compounds. In particular, novel reactive phosphonate compounds having the formula Y-X-N(W) $(ZPO_3M_2)$ wherein the individual structural moieties have a specifically defined meaning as set forth hereinafter. The "reactive" moiety, Y, is preferably represented by Cl, I, Br, $HSO_4$, $NO_3$, $CH_3SO_3$ and p-toluene sulfonic acid, and mixtures thereof, whereas the hydrocarbon link, X, between the nitrogen and the reactive moiety is preferably a hydrocarbon chain having from 3 to 30 carbon atoms or $[A-O]_x$-A wherein A is a $C_2$-$C_6$ hydrocarbon chain and x is an integer of from 1-100. The novel phosphonates herein are particularly beneficial for "tailor" synthesizing novel phosphonate compounds for example for use in a multitude of applications such as dispersion, water-treatment, scale inhibition, sequestration, corrosion inhibition, pharmaceuticals and pharmaceutical intermediates, textiles, detergents, secondary oil recovery, paper industry, sugar and beer industry, fertilizers and micronutrients and metal treatment.

Phosphonate compounds broadly are well-known and have been used in multiple applications. The prior art is thus crowded and diverse. EP 0 401 833 discloses aminophosphonate-containing polymers and their use as dispersants for concentrated aqueous particulate slurries and as corrosion and scale inhibitors. The phosphonates contain ethylenically unsaturated comonomers and can be prepared by reacting the polymeric reactant with a phosphonate halohydrin or with a phosphonate epoxide.

US 5,879,445 describes the use of compounds containing at least one phosphonic aminoalkylene group and at least one polyalkoxylated chain for fluidizing an aqueous suspension of mineral particles or hydraulic binder paste. WO 94/08913 divulges comparable technologies.

US 4,330,487 describes a process of preparing N,N'-disubstituted methylene phosphonic acids by reacting α, ω-alkylene diamines with formaldehyde and phosphorous acid in aqueous medium in accordance with the Mannich reaction at a pH of generally less than 1. Zaitsev V.N. et al., Russian Chemical Bulletin, (1999), 48(12), 2315-2320, divulges modified silicas containing aminophosphonic acids covalently bonded onto the silica surface.

US 4,260,738 describes starch ether derivatives containing aminophosphonic acid groups, namely either one or two anionic methylene phosphonic acid groups, bound to a cationic nitrogen. The starch derivative is said to exhibit cationic or anionic properties which (properties) may be increased by introducing selected groups together with the aminophosphonic acid reagent. The starch derivatives can be used beneficially as pigment retention aids in paper making processes. US 4,297,299 pertains to novel N-(alkyl)-N-(2-haloethyl)-aminomethylene phosphonic acids exhibiting desirable pigment retention properties upon use in paper making processes.

The prior art does provide a limited number of phosphonate compounds which are frequently marginally adapted and optimized for use within the context of an ever broadening range of known and novel applications.

It is a major object of this invention to provide novel phosphonate compounds eminently suitable and optimized for a large variety of applications. Another object of this invention aims at generating a range of novel reactive phosphonates suitable for "tailor" synthesizing phosphonate compounds, with high selectivity, which compounds can be used beneficially in established and additional, to current usages, applications.

The foregoing and other objects can now be met by a specifically defined class of reactive phosphonate compounds as defined in detail below.

The term "percent" or "%" as used throughout this application stands, unless defined differently, for "percent by weight" or "% by weight". The terms "phosphonic acid" and "phosphonate" are also used interchangeably depending, of course, upon medium prevailing alkalinity/acidity conditions. The term "reactive" phosphonate is merely meant to emphasize the ease with which the claimed phosphonate compounds can be used for synthesizing other phosphonates.

Phosphonic acid compounds have now been discovered containing, in essence, a reactive moiety Y attached, by means of a hydrocarbon link, X, to an amino phosphonic acid moiety. In more detail, this invention concerns:

a reactive phosphonate compound having the formula:

Y-X-N (W) $(ZPO_3M_2)$

wherein Y is selected from: substituents the conjugated acid of which have a pKa equal to or smaller than 4.0;

X is selected from $C_3$-$C_{50}$ linear, branched, cyclic or aromatic hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear, branched, cyclic or aromatic hydrocarbon chain; and $[A-O]_x$-A wherein A is a $C_2$-$C_9$ linear, branched, cyclic or aromatic hydrocarbon chain and x is an integer from 1 to 200;

provided that when X is substituted by OH such moiety can be attached to any carbon atom other than the second carbon atom starting from Y;

Z is a $C_1$-$C_6$ alkylene chain;

M is selected from H and $C_1$-$C_{20}$ linear, branched, cyclic or aromatic hydrocarbon chains;

W is selected from H, $ZPO_3M_2$ and $[V-N(K)]_nK$, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from $[A-O]_x$-A wherein A is a $C_2$-$C_9$ linear, branched, cyclic or aromatic hydrocarbon chain and x is an integer from 1 to 200; and

K is $ZPO_3M_2$ or H and n is an integer from 0 to 200.

In preferred executions, the pKa is equal to or smaller than 1.0 and X is a hydrocarbon having from 3 to 30 carbon atoms or $[A-O]_x$-A wherein A is a $C_2$-$C_6$ hydrocarbon chain and x is of from 1-100 and W is $ZPO_3M_2$.

The pKa value is a well known variable which can be expressed as follows:

$$pKa = -\log_{10}Ka.$$

wherein Ka represents the thermodynamic equilibrium acidity constant. The pKa values of all acid substances are known from the literature or can, if this were needed, be determined conveniently.

Y can preferably be selected from Cl, Br, I, $HSO_4$, $NO_3$, $CH_3SO_3$ and p-toluene sulfonic acid and mixtures thereof.

The individual radicals in the phosphonate compound can, in a preferred manner, be beneficially selected from species as follows:

| Moiety | Preferred | Most Preferred |
|---|---|---|
| X | $C_3$-$C_{30}$ | $C_3$-$C_{12}$ |
|  | $[A-O]_x$-A | $[A-O]_x$-A |
| V | $C_2$-$C_{30}$ | $C_2$-$C_{12}$ |
|  | $[A-O]_x$-A | $[A-O]_x$-A |

wherein for both, X and V independently;

| | | |
|---|---|---|
| A | $C_2$-$C_6$, | $C_2$-$C_4$; and |
| x | 1-100 | 1-100 |
| Z | $C_1$-$C_3$ | $C_1$ |
| M | H, $C_1$-$C_6$ | H, $C_1$-$C_4$ |
| n | 1-100 | 1-25 |

A phosphonate compound having an OH substituent attached to the second, starting from Y, carbon atom of X, in the event Y stands for halogen, is not a phosphonate in the meaning of the invention. Preferably, a reactive phosphonate, in the event Y stands for halogen, shall not carry an OH substituent attached to any one of the second, third or fourth, starting from Y, carbon atom of X.

The preparation of the novel phosphonate compounds herein usually can require a sequence of individually well known measures routinely available in the domain of chemical synthesis. In one approach, the phosphonate compound can be prepared by phosphonating a chloroalkyl amine hydrochloride in a conventional manner by reaction, in aqueous medium, with phosphorous acid and formaldehyde, in acid medium, at a temperature generally in the range of from 50 °C to 140 °C, preferably of from 90 °C to 120 °C. The reaction partners are used in molar proportions consonant with the moiety ratios of the phosphonate product to be synthesized. In another approach, a reactive phosphonate can be synthesized by reacting, in aqueous medium having a pH of 6 or smaller, the corresponding alcohol e.g. HO-X-N $(ZPO_3M_2)_2$ with a suitable precursor for Y, e.g. hydrobromic, hydrochloric and/or hydroiodic acid, in obviously acid medium at a temperature in the range of from 100 °C to 200 °C, preferably 110 °C to 150 °C. A reactive phosphonate compound can also be prepared, as illustrated below, by a sequence of reactions involving, for example, the conversion of acrylonitrile:

$$CH_2=CH\text{-}CN\ (H) + HCl/H_2O \rightarrow Cl\text{-}CH_2\text{-}CH_2\text{-}C{\equiv}N\ (I)$$

(I) + $H_2$/catalyst → Cl-$CH_2$-$CH_2$-$CH_2$-$NH_2$ (C)

(C) + $CH_2O$/$H_3PO_3$/HCl → Cl-$(CH_2)_3$-$N(CH_2PO_3H_2)_2$ (D).

Alternatively, the phosphonate compounds herein can be synthesized differently as follows:

(H) + $H^+$/$H_2O$ → HO-$CH_2$-$CH_2$-CN (E)

(E) + $H_2$/catalyst → HO-$(CH_2)_3$-$NH_2$ (F)

(F) + HCl/$H_2O$ → (C) → (D) or

(F) + $CH_2O$/$H_3PO_3$/HCl → HO-$(CH_2)_3N(CH_2PO_3H_2)_2$ (G)

(G) + HCl/$H_2O$ → (D).

The acrylonitrile starting material can be substituted by other starting materials capable of yielding a reactive phosphonate. As an example such a phosphonate can be routinely synthesized starting from dichloro ethane and an alkali cyanide.

In yet another approach, this invention contemplates a process for the manufacture of the phosphonate compound of Claim 1, wherein Y is I or Br, by ion-exchange of the chloro- phosphonate compound with an aqueous solution containing an inorganic, preferably an alkali metal, iodide or bromide salt at a temperature of from 10 °C to 100 °C wherein the ion exchange reaction medium has an acid pH equal to 6 or smaller, preferably in the range of from 1 to 4.

The pH measurements in the manufacturing arrangements are determined in the reaction medium at the reaction temperature.

The inventive phosphonates are illustrated by means of individual sample preparations, Examples I-VI, recited hereinafter.

I: 260.04 g of 3-Chloropropyl amine hydrochloride (2 moles) are dissolved in 250 ml of water and mixed with 328g of phosphorous acid (4 moles) and 295.72 g of 37% aqueous HCl (3 moles). The mixture is heated under stirring to between 100°C and 110°C. 361.02g of 36.6% Aqueous formaldehyde (4.4 moles) are added in 240 minutes while maintaining the temperature between 104°C and 111°C. Heating at 110 °C is continued for an additional period of 60 minutes. Reaction mixture is then poured into a mixture of 1 liter of water and 200 ml ethanol at 50 °C. Under cooling, a white precipitate is formed which is separated by filtration. 414g (73.5%) of a white powder is obtained after drying. $^{31}$P NMR analysis of that white powder showed the presence of 93.5 % of 3-chloro propyl imino bis (methylene phosphonic acid) (CPIBMPA); 2.7% of the corresponding azetidinium salt; 3.7% of hydroxy homologue of CPIBMPA and 0.1% of phosphorous acid.

II: 14.76g (0.025 mole) of a 44.53% aqueous solution of 3-hydroxy propyl imino bis (methylene phosphonic acid) are placed in a high pressure glass tube and mixed with 9.86g (0.10 mole) of 37% aqueous HCl. The tube is capped and the mixture heated under stirring between 120°C and 125°C for 7 hours. $^{31}$P NMR analysis of the crude reaction product showed the presence of 67% of 3-chloro propyl imino bis(methylene phosphonic acid) with the balance being in majority the starting hydroxy product.

III: 14.76g (0.025 mole) of a 44.53% aqueous solution of 3-hydroxy propyl imino bis (methylene phosphonic acid) are placed in a high pressure glass tube and mixed with 17.21g (0.10 mole) of 47% aqueous HBr. The tube is capped and the mixture heated under stirring between 120°C and 125°C for 7 hours. $^{31}$P NMR analysis of the crude reaction product showed the presence of 62% of 3-bromo propyl imino bis(methylene phosphonic acid) with the balance being in majority the starting hydroxy product.

IV: 14.76g (0.025 mole) of a 44.53% aqueous solution of 3-hydroxy propyl imino bis (methylene phosphonic acid) are placed in a high pressure glass tube and mixed with 22.44g (0.10 mole) of 57% aqueous HI. The tube is capped and the mixture heated under stirring between 120°C and 125°C for 7 hours. At room temperature a yellow precipitate is formed and separated from the aqueous phase by filtration. $^{31}$P NMR analysis of the washed and dried precipitate indicated that it is 3-iodo propyl imino bis(methylene phosphonic acid) (IPBMPA). Yield is 70%.

V: 7.32g (0.025 mole) of a 68.8% aqueous solution of 2-(2-imino bis[methylene phosphonic acid] ethoxy) ethanol are placed in a high pressure glass tube and mixed with 9.86g (0.1 mole) of 37% aqueous HCl. The tube is capped and the mixture heated under stirring between 120°C and 125°C for 7 hours. $^{31}$P NMR analysis of the crude reaction product showed the presence 69% of 2-(2-imino bis[methylene phosphonic acid] ethoxy) chloro ethane with the balance being in majority the starting hydroxy product.

VI: 7.32g (0.025 mole) of a 68.8% aqueous solution of 2-(2-imino bis[methylene phosphonic acid] ethoxy) ethanol are placed in a high pressure glass tube and mixed with 17.21g (0.1 mole) of 47% aqueous HBr. The tube is capped and the mixture heated under stirring between 120°C and 125 °C for 7 hours. $^{31}$P NMR analysis of the crude reaction product showed the presence of 68% of 2-(2-imino bis[methylene phosphonic acid] ethoxy) bromo ethane with the balance being in majority the starting hydroxy product.

The reactivity of hydroiodic acid in relation to ether or thioether bonds is documented in the art; it routinely follows that the preparation of the iodo species, corresponding to the chloro/bromo species of Examples V-VI, requires the use of a halogen exchange of the reaction product with an inorganic iodide.

The testing data illustrate and clarify significant aspects of the claimed technology. I: shows the formation of the chloropropyl derivative, in a 73.5 % yield, starting from the corresponding chloroamine. II:, III: and IV:

respectively describe the preparation of the 3-chloro, 3-bromo and 3-iodo propyl derivatives starting from the corresponding alcohol. The yields are, considering the non-optimized reaction conditions, in the range of from 60 % to 70 % which is high keeping in mind that the non-reacted part (by-product) is predominantly represented by the starting alcohol which can, in turn, be recycled. V: and VI: pertain to the formation of chloro or bromo derivatives starting from the corresponding hydroxyl alkyl ether amine. The products were formed in yields of 68 % to 69 % whereby the unreacted starting material constitutes the majority of the by-products.

**Claims**

1. A reactive phosphonate compound having the formula:

$$Y\text{-}X\text{-}N \, (W) \, (ZPO_3M_2)$$

wherein Y is selected from: substituents the conjugated acid of which have a pKa equal to or smaller than 4.0;
X is selected from $C_3$-$C_{50}$ linear, branched, cyclic or aromatic hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear, branched, cyclic or aromatic hydrocarbon chain; and $[A\text{-}O]_x$-A wherein A is a $C_2$-$C_9$ linear, branched, cyclic or aromatic hydrocarbon chain and x is an integer from 1 to 200;
provided that when X is substituted by OH such moiety can be attached to any carbon atom other than the second carbon atom starting from Y;
Z is a $C_1$-$C_6$ alkylenes chain;
M is selected from H and $C_1$-$C_{20}$ linear, branched, cyclic or aromatic hydrocarbon chains;
W is selected from H, $ZPO_3M_2$ and $[V\text{-}N(K)]_nK$, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from $[A\text{-}O]_x$-A wherein A is a $C_2$-$C_9$ linear, branched, cyclic or aromatic hydrocarbon chain and x is an integer from 1 to 200; and
K is $ZPO_3M_2$ or H and n is an integer from 0 to 200.

2. The phosphonate compound in accordance with Claim 1 wherein the pKa is equal to or smaller than 1.0;

3. The phosphonate compound in accordance with Claim 1 wherein the individual moieties are selected as follows: X is $C_3$-$C_{30}$ or $[A\text{-}O]_x$-A; V is $C_2$-$C_{30}$ or $[A\text{-}O]_x$-A, wherein for both, X and V independently, A is $C_2$-$C_6$ and x is 1-100; Z is $C_1$-$C_3$; M is H or $C_1$-$C_6$; and n is 1-100.

4. The phosphonate compound in accordance with Claim 1 wherein Y is selected from the group of Cl, I, Br, $HSO_4$, $NO_3$, $CH_3SO_3$ and p-toluene sulfonic acid and mixtures thereof.

5. The phosphonate compound in accordance with Claims 1 and 4 wherein the individual moieties are selected as

follows: X is $C_3$-$C_{12}$ or [A-O]$_x$-A; V is $C_2$-$C_{12}$ or [A-O]$_x$-A, wherein for both, X and V independently, A is $C_2$-$C_4$ and x is 1-100; Z is $C_1$; M is H, $C_1$-$C_4$ and n is 1-25.

6. The phosphonate compound in accordance with Claims 1, 3 and 5 wherein X is a linear hydrocarbon chain and x is an integer from 1-50.

7. The phosphonate compound in accordance with Claim 1 wherein the OH substituent is attached, in the event Y stands for halogen, to any carbon atoms, other than the second, third or fourth, starting from Y, carbon atoms.

8. A process for the manufacture of the phosphonate compound of Claim 1 by reacting an amine of the formula halogen-X-NH$_2$, wherein halogen stands for Cl, Br or I and X has the meaning as defined above, in aqueous medium having a pH equal to or smaller than 6, preferably of from 1 to 4, with phosphorous acid and formaldehyde at a temperature in the range of from 50 °C to 140 °C followed by recovering the phosphonate compound in a manner known per sé.

9. A process for the manufacture of the phosphonate compound in accordance with Claim 1 by reacting a compound of the formula HO-X-N(ZPO$_3$M$_2$)$_2$, wherein X, Z and M have the meaning as defined above, in aqueous medium having an acid pH equal to or smaller than 6, with a hydrohalogenic acid selected from hydrochloric acid, hydrobromic acid and hydroiodic acid with the proviso that hydroiodic acid is not used in the event X contains ether or thio-ether bonds followed by recovering the phosphonate compound in a manner known per sé.

10. The process for the manufacture of the phosphonate compound in accordance with Claims 1 and 9, wherein Y is iodide or bromide, by ion-exchange of the chloro compound with an aqueous solution containing an inorganic iodide or bromide salt at a temperature of from 10 °C to 100 °C wherein the ion-exchange medium has a pH of 6 or smaller.

**European Patent Office**

## PARTIAL EUROPEAN SEARCH REPORT

**Application Number**

which under Rule 45 of the European Patent Convention shall be considered, for the purposes of subsequent proceedings, as the European search report

EP 06 02 5515

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MORTIER, JACQUES ET AL: "Synthesis of N-Alkyl/Aryl-.alpha./.beta.-Aminoalkylphosphonic Acids from Organodichloroboranes and .alpha./.beta.-Azidoalkylphosphonates via Polyborophosphonates" ORGANIC LETTERS , 1(7), 981-984 CODEN: ORLEF7; ISSN: 1523-7060, 1999, XP002431622 * compound 33 * ----- | 1-7 | INV. C07F9/38 |
| D,X | EP 0 401 833 A2 (NAT STARCH CHEM INVEST [US]) 12 December 1990 (1990-12-12) page 3, line 31 - page 4, line 45* compound IV * ----- | 1-6 | |
| X | DATABASE CA [Online] CHEMICAL ABSTRACTS SERVICE, COLUMBUS, OHIO, US; XU, XINGJUE ET AL: "Structure-based design of novel inhibitors of 3-deoxy-D-manno-octulosonate 8-phosphate synthase" XP002431624 retrieved from STN Database accession no. 2004:93833 * abstract * -/-- | 1 | |

**TECHNICAL FIELDS SEARCHED (IPC)**

C07F

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 30 April 2007 | Richter, Herbert |

EPO FORM 1503 03.82 (P04C07)

**European Patent Office**

## PARTIAL EUROPEAN SEARCH REPORT

Application Number

EP 06 02 5515

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| | & DRUG DESIGN AND DISCOVERY , 18(2-3), 91-99 CODEN: DDDIEV; ISSN: 1055-9612, 2003, ----- | | |
| X | US 4 707 306 A (LEIGHTON, JOHN C. ET AL) 17 November 1987 (1987-11-17) * example 1 * ----- | 1-9 | |
| A | STEVENS, CHRISTIAN ET AL: "A convenient synthesis of dialkyl [2-(bromomethyl)aziridin-1-yl]methylphosphonates, new heterocyclic .beta.-aza phosphonates" SYNLETT , (2), 180-182 CODEN: SYNLES; ISSN: 0936-5214, 1998, XP001093728 * compounds 13A,13B,13C * ----- | 1-6 | TECHNICAL FIELDS SEARCHED (IPC) |

EPO FORM 1503 03.82 (P04C10)

**European Patent Office**

**INCOMPLETE SEARCH**
**SHEET C**

Application Number

EP 06 02 5515

Claim(s) searched completely:
         -

Claim(s) searched incompletely:
      1-10

Reason for the limitation of the search:

The features "cyclic" and "aromatic" in the  terms "cyclic or aromatic hydrocarbon chain(s)" ,  "cyclic or aromatic C..-C...  hydrocarbon chain" or "C...-C...  cyclic or aromatic  hydrocarbon groups" are not in compliance with the clarity requirement of Article 84 EPC. The non-compliance with the substantive provisions is to such an extent, that a meaningful search of the whole claimed subject-matter of the claims could not be carried out (Rule 45 EPC and Guidelines B-VIII, 3).

Hence, subject-matter relating to "cyclic" and "aromatic" ( R', M, V and A ) in connection with the above terms had to be ignored during search of the claims.

European Patent
Office

Application Number

EP 06 02 5515

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

10

**European Patent Office**

**LACK OF UNITY OF INVENTION
SHEET B**

Application Number

EP 06 02 5515

The Search Division considers that the present European patent application does not comply with the requirements of unity of invention and relates to several inventions or groups of inventions, namely:

```
1. claims: 6,  partially: 1-5, 7-10

              X = hydrocarbon chain
                     ---

2. claims: partially: 1-5, 7-10

              X = [A-O]x - A
                     ---
```

## ANNEX TO THE EUROPEAN SEARCH REPORT
## ON EUROPEAN PATENT APPLICATION NO.

EP 06 02 5515

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2007

| Patent document cited in search report | | Publication date | Patent family member(s) | | Publication date |
|---|---|---|---|---|---|
| EP 0401833 | A2 | 12-12-1990 | CA | 2017786 A1 | 08-12-1990 |
| | | | DE | 69003013 D1 | 07-10-1993 |
| | | | DE | 69003013 T2 | 20-01-1994 |
| | | | US | 5023368 A | 11-06-1991 |
| US 4707306 | A | 17-11-1987 | AU | 578187 B2 | 13-10-1988 |
| | | | AU | 8247887 A | 23-06-1988 |
| | | | CA | 1287441 C | 06-08-1991 |
| | | | DE | 3783020 D1 | 21-01-1993 |
| | | | DE | 3783020 T2 | 15-04-1993 |
| | | | EP | 0273107 A2 | 06-07-1988 |
| | | | JP | 1837759 C | 11-04-1994 |
| | | | JP | 5048235 B | 20-07-1993 |
| | | | JP | 63162696 A | 06-07-1988 |
| | | | MX | 168904 B | 14-06-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0401833 A
- US 5879445 A
- WO 9408913 A
- US 4330487 A
- US 4260738 A
- US 4297299 A

**Non-patent literature cited in the description**

- **ZAITSEV V.N. et al.** *Russian Chemical Bulletin,* 1999, vol. 48 (12), 2315-2320